**Europäisches Patentamt**

**European Patent Office**

**Office européen des brevets**

(19)

(11) Numéro de publication : **0 402 555 B1**

(12)

# FASCICULE DE BREVET EUROPEEN

(45) Date de publication du fascicule du brevet :
**02.06.93 Bulletin 93/22**

(51) Int. Cl.⁵ : **A23C 20/00**

(21) Numéro de dépôt : **89810459.1**

(22) Date de dépôt : **14.06.89**

(54) **Procédé pour la préparation d'un produit alimentaire à base de protéines du lait, de matières grasses et d'eau.**

(43) Date de publication de la demande :
**19.12.90 Bulletin 90/51**

(45) Mention de la délivrance du brevet :
**02.06.93 Bulletin 93/22**

(84) Etats contractants désignés :
**AT BE CH DE ES FR GB GR IT LI LU NL SE**

(56) Documents cités :
**DE-A- 2 432 148**
**GB-A- 2 002 217**
**US-A- 4 104 413**
**US-A- 4 232 050**

(73) Titulaire : **QUANTEX INTERNATIONAL LIMITED**
**12, Herbert Place**
**Dublin 2 (IE)**

(72) Inventeur : **Giddey, Claude**
**59, route de Chêne**
**Ch-1208 Genève (CH)**
Inventeur : **Dove, Georges**
**Quai du Cheval Blanc 1**
**Ch-1227 Carouge/Ge (CH)**

(74) Mandataire : **Dousse, Blasco et al**
**7, route de Drize**
**CH-1227 Carouge/Genève (CH)**

## Description

La présente invention se rapporte à un procédé de préparation d'un produit alimentaire homogène, stable au stockage, à partir d'une formulation contenant essentiellement un caséinate calcique, des matières grasses non animales et moins de 55 % en poids d'eau, procédé suivant lequel on émulsionne ces matières grasses dans l'eau au moyen d'un émulsifiant de manière à former une émulsion de type "huile-dans-l'eau" puis à une température de l'ordre de 60 à 100°C on disperse de façon homogène dans cette émulsion les solides de la formulation, à savoir le caséinate calcique et les ingrédients restants, notamment au moins un acide organique, du sel, des arômes et des agents stabilisants, puis on moule le mélange résultant en coulant à chaud dans des formes et on laisse ensuite le produit se solidifier par refroidissement.

L'existence de produits obtenus à partir de caséine, corps gras et eau, ressemblant aux fromages, est connue de l'état de la technique et ces produits ont fait l'objet de procédés de fabrication décrits dans des publications dont certaines sont résumées ci-dessous à titre illustratif.

Ainsi, le document US-A. 4,459,313 (SWANSON) décrit-il un produit alimentaire ressemblant à du fromage qu'on obtient en faisant coaguler un mélange de caséine et de petit-lait provenant de la fabrication de fromages de type habituel. Ce coagulat est broyé, mélangé à des huiles végétales et à des agents émulsifiants, et chauffé entre 68 et 96°C jusqu'à formation d'une masse fondue qu'on peut ensuite mouler sous une forme quelconque.

Le document US-A. 4,397,926 (BORDEN) divulgue un procédé de fabrication d'un produit alimentaire analogue au fromage, suivant lequel on mélange à 43 - 66°C de la caséine précipitée par la présure avec une solution aqueuse de phosphates (sels de fonte), on ajoute de la caséine acide et, entre 74° et 82°C, une huile comestible, tout en continuant à mélanger jusqu'à obtention d'une masse plastique homogène qu'on peut ensuite mouler.

Le document US-A. 4,397,878 (MEIJI) décrit un procédé de fabrication d'un produit alimentaire ressemblant à un fromage mou. Suivant ce procédé, on mélange en solution aqueuse de la caséine, une huile ou une graisse, un agent émulsifiant, du lactose, un sel calcique et un phosphate, de manière à obtenir un liquide qu'on pasteurise et qu'on fait fermenter ensuite par addition d'une souche de microorganisme convenable en présence de présure.

Le document US-A. 4,390,560 (MEIJI) décrit un procédé très analogue au précédent à l'exception de la dernière étape qui s'effectue sans la fermentation provoquée par addition d'une culture de microorganismes.

Le document US-A. 4,232,050 (SCM CORP.) décrit la fabrication d'un aliment imitant le fromage à pâte dure pouvant être râpé de type mozarella, parmesan, cheshire, münster ou fromage suisse. Suivant ce procédé, on mélange à chaud une huile végétale hydrogénée, des protéines dont une partie est constituée par de la caséine sodique, un sel calcique, un acide organique, des colorants et arômes, ainsi qu'un émulsifiant organique dont la valeur HLB (indice lipo-hydrophilique) dépasse 10. Parmi de tels émulsifiants, on cite les esters d'acides gras et du polyglycérol, les polysorbates, les mono- et di-glycérides éthoxylés et les esters des mono- et di-saccharides qui sont fluides à température ambiante.

Le document US-A. 4,197,322 (UNIVERSAL FOOD CORP.) décrit un procédé de fabrication d'un fromage synthétique suivant lequel on fait cailler enzymatiquement (par exemple, avec de la présure) une solution de caséine et d'un sel calcique basique, puis on mélange le caillé avec une huile comestible et on ajoute un acide comestible comme l'acide lactique. Comme huiles comestibles, on cite les huiles hydrogénées de coco, de soja, de coton ainsi que les corps gras d'origine animale, comme le beurre et le saindoux.

Le document US-A. 4,110,484 (SCM CORP.) décrit également un procédé de fabrication d'une imitation de fromage mozarella à partir de matières grasses, caséine, eau, arômes et ingrédients acidifiants capables de faire coaguler la protéine en mélange avec les autres ingrédients. Ce procédé fonctionne en continu et consiste à faire parvenir dans un réacteur mélangeur deux écoulements distincts, l'un constitué des matières solides et l'autre des ingrédients liquides incluant l'eau, l'acide et la matière grasse. Les divers composants sont ainsi intimement mélangés et le mélange résultant est homogénéisé et coulé dans des moules. Le mélange ainsi produit à une température de l'ordre de 60 à 70°C présente une viscosité très élevée et des caractères d'écoulement non-newtonien.

Le document EP-A. 105 566 (DMV-CAMPINA) décrit la fabrication d'un produit ressemblant au fromage suivant lequel on prépare tout d'abord une pâte pétrissable homogène de protéine lactée et d'eau ne contenant que peu ou pas de calcium et dans laquelle la portion de caséine-kappa a été convertie enzymatiquement (enzyme de type chymosine) en un produit réactif avec le calcium. Puis on ajoute d'autres ingrédients, y compris des matières grasses et un supplément d'eau et, finalement, on y ajoute du calcium. On peut ainsi obtenir un fromage sans devoir recourir au traditionnel caillage du lait par la présure.

Le document GB-A. 1,439,184 décrit un procédé de préparation d'un "lait" synthétique à partir d'un lait dégraissé et d'une émulsion aqueuse de matières grasses. Ce "lait" peut être ensuite converti en produits ressemblant au fromage par les moyens habituels, notamment précipitation par la présure et pressage du caillé ainsi obtenu.

Le document US-A. 4,684,533 (KRAFT) décrit la fabrication de produits alimentaires imitant diverses variétés de fromage au moyen de formulations comprenant, outre des protéines lactées, des phosphates, des acides organiques, des arômes et de la margarine, certains ingrédients normalement étrangers au fromage habituel, notamment de la gélatine et du carrageenane.

Les divers ingrédients sélectionnés des formulations sont vigoureusement mélangés vers 70°C et le produit est ensuite moulé et mis à refroidir de manière qu'il se solidifie.

Les procédés illustrés ci-dessus fournissent des produits alimentaires intéressants au point de vu nutrition, mais qui ne sont pas dépourvus de certains défauts d'aspect et de structure (trous, fissures, bulles d'air), d'homogénéité et de stabilité à la conservation (séparation et exudation d'eau et d'huile au stockage). Par ailleurs, la consistance de ces produits est parfois critiquable (texture trop élastique ou manque de consistance, aspect pâteux).

Le DE-A-2 432 148 se rapporte à la fabrication d'une garniture sucrée à manger avec du pain avec une forte teneur en protéines, susceptible d'être coupée en tranches. Le procédé de fabrication consiste à faire fondre du triglycéride et un agent émulsifiant, à former une émulsion avec une certaine quantité d'eau et finalement à mélanger cette émulsion avec des substances solides solubles dans la phase aqueuse de l'émulsion : essentiellement du caséinate de sodium, du sucre et quelques additifs alimentaires. Ce mélange est chauffé à 90°C en le remuant. La masse homogène ainsi obtenue est moulée et refoidie après quoi elle prend une consistance solide. Elle est ensuite soit conditionnée en un bloc, soit découpée en tranches.

Ce procédé permet de travailler à température ambiante. Il faut toutefois relever que le caséinate utilisé est du caséinate de sodium, soluble dans l'eau et qu'en fait toutes les substances solides mélangées à chaud avec l'émulsion se dissolvent dans la phase acqueuse. Ce document ne résoud donc pas le problème du mélange homogène d'une phase solide insoluble dans l'eau avec une émulsion.

On a cherché à remédier à ces défauts et, notamment, par un procédé de mélange à pression sub-atmosphérique ainsi que décrit dans le document US-A. 4,104,413 (ANDERSON). Suivant ce procédé, destiné à la fabrication d'un produit alimentaire ressemblant au fromage cheddar dont le contenu en eau est d'environ 50% en poids, à partir de 15 - 33% de caséinate de calcium, 1 - 5% d'amidon, 12 - 35% de matières grasses, les ingrédients restants comprenant des émulsifiants, acides et arômes, on forme une émulsion d'eau et de matières grasses à pression sub-atmosphérique et on ajoute à cette émulsion les autres ingrédients solides, toujours sous pression réduite, de manière à obtenir un mélange homogène sans gaz ou air dissous. Après 3 jours de repos au froid, le produit ainsi obtenu est assez dur pour être tranché ou râpé facilement.

Cependant, la nécessité d'opérer sous pression réduite n'est pas sans inconvénients, ne serait-ce qu'en raison du coût des installations et autres appareils pour lesquels on doit prévoir des joints étanches résistant aux différences de pression et permettant de faire le vide dans l'appareil. En conséquence, on a cherché à remédier à ces inconvénients au moyen d'un procédé qu'on puisse mettre en oeuvre à pression ambiante, et c'est là l'objet de la présente invention.

Le présent procédé, tel que décrit à la revendication 1, tire parti de la fluidité particulièrement élevée de l'émulsion type "huile-dans-l'eau" qu'on utilisé comme milieu de dissolution et dispersion des autres ingrédients du produit alimentaire recherché, ce produit étant à base de protéines lactées, de corps gras et d'eau. En effet, on a constaté que l'homogénéisation des protéines et autres ingrédients ne se faisait efficacement que dans une émulsion très fluide, de viscosité ne dépassant pas quelques mPa.s (cP) ou quelques dizaines de mPa.s (cP) (de préférence 1 à 10 mPa.s (cP)) à la température où s'effectue la dispersion, c'est-à-dire entre environ 60 et 100°C à pression ambiante. Dans de telles conditions, et quoiqu'il se durcisse parfaitement par refroidissement après moulage, le mélange homogène final des ingrédients présente également une grande fluidité relative (une viscosité généralement inférieure à 5 Pa.s (5000 cP) à 80 - 90°C), ce qui permet de conférer à la structure de l'aliment, après moulage et solidification par refroidissement, une homogénéité extrêmement prononcée et une texture fine, douce quoique ferme, et très stable au stockage. Les microgoutelettes du corps gras en émulsion dans la phase aqueuse étant très petites (de l'ordre de quelques dizaines de microns à quelques microns (par exemple 5 - 30 μm), ou moins encore), l'émulsion solidifiée reste très stable au stockage et ne présente pas de phénomène de réversion (avec libération d'eau et d'huile) avec le temps.

De préférence, les formulations convenant à l'application du présent procédé comprennent, en poids, de 35 à 55% d'eau, de 20 à 30% de corps gras et de 15 à 30% de matières protéiques, y compris la caséine ou autres protéines lactées; le restant à 100% est constitué par les ingrédients acidifiants (pour conférer au produit un pH de 5 à 6,5 environ), les ingrédients émulsifiants, le sel, les adjuvants de fonte et de stabilisation (phosphates), les arômes et les agents anti-microbiens et anti-fongiques (agents de préservation).

La nature des matières grasses utilisées n'est pas critique pour autant qu'elles deviennent bien fluides par chauffage à 40°C. De manière générale, on préfère utiliser un mélange huile-graisse, notamment un mélange 2/3 à 3/2 en poids de ces deux formes de corps gras, au mieux un mélange 1/1. Les graisses végétales sont des matières grasses végétales hydrogénées ou fractionnées, notamment d'arachide, tournesol, colza, coton, soja, palme, coco, etc... L'origine des huiles utilisées est la même que celle des graisses, à la différence près qu'il s'agit là de matières grasses non-hydrogénées. On préfère les huiles de soja, d'arachide et de tournesol.

Comme agents émulsifiants permettant de réaliser une émulsion se prêtant à la réalisation de l'invention, on cite plus particulièrement les esters d'acides gras et polyols, notamment polyglycérol, hexitol, sorbitol et mono- et di-saccharides, ces polyols pouvant être éthoxylés. Les acides gras considérés sont les acides comportant, de préférence, 12 à 18 C. Ces acides (indice d'iode de 10 à 90) dérivent de corps gras naturels, notamment des huiles de maïs, coton, palme, arachide, colza, sésame, soja, ainsi que le suif, le saindoux et le tallol. Le mélange de polyglycérol utilisé pour de tels émulsifiants peut contenir de deux à treize unités de glycérol (la polymérisation du glycérol est décrite dans les documents US-A. 3,637,774 et 3,968,169). De préférence l'indice HLB des émulsifiants est de 6 à 20. Un émulsifiant convenant au présent procédé est l'oléate d'octaglycérol, HLB 13; indice de saponification 70 -85; acidité inférieure à 4,1. Pour préparer la présente émulsion, on en utilise environ 0,1 à 0,6% en poids dans l'eau de la formulation.

La protéine du lait qu'on utilise dans la présente formulation est, de préférence, le caséinate de calcium. On peut cependant utiliser d'autres formes de caséine, notamment la caséine acide ou la caséine de présure qu'on complètera par une quantité équivalente de sel de Ca (par exemple chlorure). Comme caséine calcique on utilise de préférence un produit de densité élevée obtenu par séchage au rouleau. Outre la caséine, les présentes formulations peuvent aussi prévoir, en complément, de la poudre de lait et des protéines végétales, notamment de graines oléagineuses, de soja et autres légumineuses. En général, l'apport de ces protéines d'origine végétale ne dépasse pas environ 10 - 30% poids de la caséine mise en oeuvre dans le procédé.

Les présentes formulations prévoient, parmi les ingrédients restants, du sel ordinaire, des arômes, notamment arômes de fromage ou autres (0,01 à 0,2%), des inhibiteurs contre l'attaque par les moisissures (préservateurs), par exemple le sorbate, le benzoate, et similaires (0,1 - 0,5%) et les sels de fonte (1 - 3%). Ces sels, stabilisants bien connus dans l'industrie du fromage fondu, comprennent généralement des phosphates (mono, di et triphosphates alcalins et alcalinoterreux comestibles) qui améliorent la fluidification des solutions de protéines hydrophiles aux températures élevées.

Les présentes formulations admettent également de faibles quantités d'amidons sous forme de farines de céréales, notamment de maïs. Il est à remarquer que ces amidons (agents d'homogénéisation) sont utilisés en proportion relativement élevée dans les compositions de fromage synthétique de l'art antérieur. Dans les formulations convenant au présent procédé, la qualité fluidisante de l'émulsion "huile-dans-eau" de départ ne requiert pas d'agent d'homogénéisation complémentaire. En conséquence, on préfère limiter l'apport éventuel d'amidons à 0,5% ou moins afin d'éviter d'augmenter la viscosité à chaud du mélange final.

Pour mettre en oeuvre le procédé suivant l'invention, on commence par préparer l'émulsion des matières grasses dans l'eau en présence de l'agent émulsifiant et, éventuellement, de l'agent permettant de fixer le pH (acides organiques). On opère à une température de l'ordre de 50 à 70°C dans un mélangeur émulsificateur rotatif à grande vitesse, le temps d'agitation nécessaire pour obtenir des quantités d'émulsion de l'ordre de 0,5 à 5 kg étant de 5 à 15 min. L'émulsion se caractérise par une très grande finesse, une grande fluidité et une très faible viscosité ce qui permet une excellente dispersibilité ultérieure des ingrédients solides dans la phase opératoire qui suit.

Pour celle-ci, on opère de préférence vers 70-95°C, ou même vers 100°C afin de pasteuriser le mélange, dans un malaxeur à vitesse lente, par exemple un malaxeur à palettes ou à bras en Z, de manière à provoquer un effet de déchirement et de cisaillement. On place l'émulsion dans le malaxeur et, celui-ci étant mis en marche, on ajoute d'abord les ingrédients éventuellement liquides, par exemple, si celle-ci n'a pas déjà été ajoutée avant émulsification, la solution d'acidification (acide lactique, malique, tartrique, citrique, ou similaire) destinée à conférer au mélange le pH choisi.

Puis, après avoir porté la température à la valeur désirée, on ajoute peu à peu les ingrédients solides, soit individuellement, soit sous forme de prémélanges, ceux-ci ayant été préalablement préparés à sec. L'addition et l'homogénéisation durent environ 20-40 min, mais ces limites peuvent être outrepassées. Le mélange ainsi obtenu se caracatérise par sa fluidité et son homogénéité; il se coule facilement dans des moules qu'on laisse ensuite refroidir pour que le produit puisse se durcir.

Le produit terminé se présente, après démoulage, sous forme de blocs de texture douce mais ferme à la fois, sans élasticité exagérée et se laissant bien râper. Son goût, qui dépend de la formulation choisie, peut être varié à volonté en fonction des ingrédients et des arômes utilisés. Il peut être utilisé avantageusement pour garnir une grande variété de plats précuisinés et congelés ou stérilisés, notamment pizzas, croque-monsieur, ramequins, gratins, lasagnes, omelettes, crêpes,.

Les exemples qui suivent illustrent l'invention de manière détaillée.

## Exemple 1

On a composé une formulation destinée à la fabrication d'un aliment de texture ressemblant au fromage Gouda à partir des ingrédients suivants:

| Ingrédients | % en poids |
|---|---|
| Graisse (tournesol hydrogénée) | 14 |
| Huile (tournesol) | 14 |
| Acide lactique (sol. $H_2O$ à 90%) | 0,8 |
| Admul-411 (émulsifiant, ester d'acide gras et polyglycérol; QUEST INTERNAT). * | 0,2 |
| Caséinate de Ca | 22,1 |
| Lait écrémé en poudre | 5 |
| Amidon de maïs | 0,3 |
| Sel | 2 |
| Sorbate de potassium (préservateur) | 0,2 |
| Sel PZO (sel de fonte de JOHA, Allemagne) | 1,3 |
| Arôme Gouda (S. GIORGIO, Italie) | 0,1 |

* Les constantes analytiques de cet émulsifiant sont les suivantes:

| | |
|---|---|
| Indice d'acidité | < 6 |
| Indice d'iode | 45 |
| Indice de saponification | 105-145 |
| Indice HLB | 6-14 |
| Humidité | < 2% |
| Stéarate de Na | < 1% |

On a placé les ingrédients liquides (matières grasses fondues, acide, eau et émulsifiant) dans un émulsificateur de type WARING BLENDOR et, entre 50 et 60°C, on a émulsifié le tout pendant 5-10 min jusqu'à obtention d'une émulsion fluide de faible viscosité à la température de travail, 4,2 mPa.s (4,2 cP).

Puis on a placé cette émulsion dans un malaxeur à bras en Z (BUSS, Suisse) et, après avoir porté la température à 85-90°C, on a ajouté les ingrédients solides préalablement mélangés à sec dans un mélangeur à poudres. Cette addition se fait progressivement, par portions, de manière à éviter les agglomérats. Après environ 20 - 40 min, les solides sont entièrement dissous ou dispersés intimement, et la masse se présente sous forme d'une masse lisse et fluide qu'on peut aisément couler dans des moules.

On coule cette masse dans des moules d'aluminium doublés de polyéthylène qu'on laisse refroidir et reposer 12 h. Puis on démoule les produits qui se présentent sous forme de blocs de couleur crème, de consistance ferme et de goût excellent. Ce produit se tranche et se râpe facilement.

## Exemples 2 à 7

On a préparé suivant la technique décrite à l'exemple 1 diverses compositions alimentaires comprenant, en tant que facteurs constants exprimés en %, les ingrédients suivants: lait en poudre 5, sels de fonte 1,3, sel de cuisine 2, antifongique 0,2, farine de maïs 0,3, émulsifiant 0,2 et, en tant que facteurs variables, les ingrédients indiqués au tableau qui suit.

Exemple No

| | 2 | 3 | 4 | 5 | 6 | 7 |
|---|---|---|---|---|---|---|
| **Ingredients** | | | | | | |
| Eau | 50 | 45 | 40 | 40 | 38 | 40 |
| Huile (arachide ou tournesol) | 10 | 12 | -- | 7 | 18,6 | 14 |
| Graisse (tournesol) | 10 | 12 | 28 | 21 | 9,4 | 14 |
| Caséinate | 19,9 | 20,1 | 22,1 | 21,9 | 24,1 | 21,9 |
| Acide lactique (à 90%) | 0,8 | 0,7 | 0,8 | 0,8 | 0,8 | 0,8 |
| Arôme * | 0,35 | 0,35 | 0,1 | 0,35 | 0,1 | 0,35 |

* choisi parmi les arômes de cheddar, parmesan, cheshire, gouda, emmenthal.

Pour la préparation des compositions indiquées au tableau précédent, on a procédé de la manière générale décrite à l'exemple 1. On a tout d'abord préparé une émulsion des matières grasses dans l'eau chauffée entre 50 et 60°C et contenant la solution d'acide lactique et l'émulsifiant. On a agité vigoureusement ces composants jusqu'à obtention d'une émulsion très fluide, d'une viscosité de 1 à 10 mPa.s (cP) à 60 - 70°C mesurée avec un viscomètre à rotor. Puis on a placé l'émulsion dans un malaxeur et, vers 70°C, on a ajouté lentement le caséinate et, ensuite, les autres additifs solides, le malaxage étant poursuivi jusqu'à homogénéisation totale (environ 30 min pour un poids de mélange de 1 à 5 kg).

Finalement, on a chauffé vers 90 - 95°C pour pasteuriser et fluidifier le produit au maximum et, entre 70 et 80°C, on l'a coulé dans des moules où il s'est solidifié au refroidissement.

On notera que l'exemple 4 ne comporte que de la graisse solide à température ambiante et point d'huile. Le produit obtenu dans ce cas ne présentait pas une consistance optimale, celle-ci étant plutôt pâteuse ou caoutchouteuse.

Pair ailleurs, suivant un autre exemple, on a réalisé un produit similaire en utilisant uniquement de l'huile sans graisse; dans ce cas, le produit final manquait de fermeté et sa qualité à été jugée inférieure.

## Revendications

1. Procédé de préparation d'un produit alimentaire homogène, stable au stockage, à partir d'une formulation contenant essentiellement un caséinate calcique des matières grasses non animales et moins de 55% en poids d'eau, procédé suivant lequel on émulsionne ces matières grasses dans l'eau au moyen d'un émulsifiant de manière à former une émulsion de type "huile-dans-l'eau" puis à une température de l'ordre de 60 à 100°C on disperse de façon homogène dans cette émulsion les solides de la formulation, à savoir le caséinate calcique et les ingrédients restants, notamment au moins un acide organique, du sel, des arômes et des agents stabilisants, puis on moule le mélange résultant en le coulant à chaud dans des formes et qu'on laisse ensuite le produit se solidifier par refroidissement, caractérisé en ce qu'on travaille à pression ambiante, la fluidité de l'émulsion "huile-dans-l'eau" étant suffisante pour que la dispersion qui résulte du mélange des ingrédients solides avec celle-ci soit parfaitement homogène et libre de gaz ou d'air.

**2.** Procédé suivant la revendication 1, caractérisé en ce que pour préparer l'émulsion "huile-dans-l'eau" on utilise un mélange huile/graisse en proportions 2/1 à 1/2, de préférence 1/1, et qu'on travaille entre 50 et 60°C au moyen d'un homogénéiseur grande vitesse.

**3.** Procédé suivant la revendication 2, caractérisé en ce que, pour préparer l'émulsion, on utilise 0,1 à 0,6% en poids d'un émulsifiant constitué d'un ester d'acides gras et d'un polyol.

**4.** Procédé suivant la revendication 1, caractérisé en ce qu'on ajoute encore 0,1 à 1% d'amidon à la formulation.

**5.** Procédé suivant la revendication 2, caractérisé en ce que la viscosité de l'émulsion est de 1 à 20 mPa.s (cP) entre 60° et 100°C.

## Patentansprüche

**1.** Verfahren zur Herstellung eines homogenen Nahrungsmittelproduktes, das bei der Lagerung beständig ist, im wesentlichen ausgehend von einer Zusammensetzung eines Calciumkaseinats, nichttierischen Fettsubstanzen und weniger als 55 Gew.% Wasser, wobei man, wie folgt, vorgeht, daß man die Fettsubstanzen in Wasser mittels eines Emulgators emulgiert, derart daß sich eine Emulsion des Typs "Öl-in-Wasser" bildet, daß man dann bei einer Temperatur in der Größenordnung von 60 bis 100°C in dieser Emulsion die Feststoffe der Zusammensetzung homogen dispergiert, d.h. das Calciumkaseinat und die Restbestandteile, insbesondere wenigstens eine organische Säure, Salz, Aromasubstanzen und Stabilisierungsmittel, dann formt man die sich ergebende Mischung, indem man sie heiß in Formen laufen läßt und man dann das Produkt durch Erkalten verfestigen läßt, dadurch gekennzeichnet, daß man bei Umgebungsdruck arbeitet, wobei die Fließfähigkeit der Emulsion "Öl-in-Wasser" ausreicht, daß die Dispersion, die sich aus der Mischung der festen Bestandteile damit ergibt, vollkommen homogen ist und von Gas oder Luft frei ist.

**2.** Verfahren nach Anspruch 1, dadurch gekennzeichnet, daß man zur Bereitung der Emulsion "Öl-in-wasser" eine Mischung Öl/Fett in Anteilen 2/1 bis 1/2, vorzugsweise 1/1, verwendet und daß man zwischen 50 und 60°C mit Hilfe eines Homogenisators großer Geschwindigkeit arbeitet.

**3.** Verfahren nach Anspruch 2, dadurch gekennzeichnet, daß man zur Bereitung der Emulsion 0,1 bis 0,6 Gew.% eines Emulgators verwendet, der aus einem Ester der Fettsäuren und einem Polyol besteht.

**4.** Verfahren nach Anspruch 1, dadurch gekennzeichnet, daß man noch 0,1 bis 1 % Stärke der Zusammensetzung hinzufügt.

**5.** Verfahren nach Anspruch 2, dadurch gekennzeichnet, daß die Viskosität der Emulsion von 1 bis 20 mPa.s zwischen 60 und 100°C liegt.

## Claims

**1.** A method for preparing a homogenous food product, stable to storage, from a formulation essentially containing calcium caseinate, non-animal fats and less than 55% of water, in which method one emulsifies the fats into water by means of an emulsifier so as to form an "oil-in-water" type emulsion, then at a temperature of the order of 60 to 100° C, one homogenously disperses in this emulsion the solids of the formulation, that is, the calcium caseinate and the remaining ingredients, namely at least an organic acid, salt, flavors and stabilizing agents, then one casts the resulting blend when hot into molds and one allows the product to solidify by cooling, characterized in that one operates under ambient pressure, the fluidity of the "oil-in-water" emulsion being sufficient for enabling that the dispersion which results from the blending of the solid ingredients with said emulsion be perfectly homogenous and deprived of gases or air.

**2.** Method according to claim 1, characterized in that one uses for preparing the "oil-in-water" emulsion an oil/fat mixture of proportion 2/1 to 1/2, preferably 1/1, and one operates between 50 and 60° C using a high-speed homogenizer.

3. Method according to claim 2, characterized in that one uses for preparing the emulsion 0.1 to 0.6% by weight of an emulsifier consisting of an ester of a fatty acid and a polyol.

4. Method according to claim 1, characterized in that one further adds 0.1 to 1% of starch to the formulation.

5. Method according to claim 2, characterized in that the viscosity of the emulsion is from 1 to 20 mPa.s (cP) between 60 and 100° C.